# EUROPEAN PATENT APPLICATION

(11) **EP 4 841 791 A1**
(43) Date of publication of application: **18.11.2026**
(21) Application number: 26178377.3
(22) Date of filing: 12.05.2026
(51) Int. Cl.: H01M 50/44, H01M 10/0525, H01M 50/414, H01M 50/457

(54) **SEPARATOR FOR RECHARGEABLE BATTERY AND RECHARGEABLE BATTERY INCLUDING THE SAME**

(30) Priority: 16.05.2025 KR 20250064095
(71) Applicant: SAMSUNG SDI CO., LTD., Yongin-si, Gyeonggi-do 17084 (KR)
(72) Inventor: PARK, Eun Jin, 16678 Suwon-si (KR); SEO, Dong Wan, 16678 Suwon-si (KR); KIM, Ga In, 16678 Suwon-si (KR); GU, Ja Yeon, 16678 Suwon-si (KR); AHN, Hwi Chan, 16678 Suwon-si (KR)
(74) Representative: Maiwald GmbH

(57) **Abstract**

The present disclosure relates to a separator for a rechargeable battery, and a rechargeable battery including the separator. The separator includes a first layer including core-shell type fibers having a core and a shell surrounding the core, the core includes a polyimide-based material and the shell includes a polysilsesquioxane-based material, and the core-shell type fibers have an average diameter of about 30 nm or more and about 200 nm or less.

## Description

### BACKGROUND

### 1. Field of the Disclosure

The present disclosure relates to a separator for a rechargeable battery, and a rechargeable battery including the separator.

### 2. Discussion of Related Art

With increasing presence of electronic devices using batteries such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electrical energy by oxidation and reduction reactions when the lithium ions are intercalated into and deintercalated from the positive electrode and the negative electrode.

### SUMMARY

One example embodiment includes a separator for a rechargeable battery having desired or improved heat resistance and desired or improved electrolyte wettability.

Another example embodiment includes a separator for a rechargeable battery including core-shell type fibers that can be manufactured without using a core-shell nozzle.

Still another example embodiment includes a separator for a rechargeable battery that does not include a porous substrate.

Yet another example embodiment includes a rechargeable battery including the separator for a rechargeable battery.

According to an aspect of the present disclosure, there is provided a separator for a rechargeable battery.

The separator for a rechargeable battery includes a first layer including core-shell type fibers having a core and a shell surrounding the core, the core includes a polyimide-based material and the shell includes a polysilsesquioxane-based material, and the core-shell type fibers have an average diameter of about 30 nm or more and about 200 nm or less.

According to another aspect of the present disclosure, there is provided a rechargeable battery.

The rechargeable battery includes a positive electrode, a negative electrode, and the separator for a rechargeable battery located between the positive electrode and the negative electrode.

### BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:
FIG. 1 illustrates a cross-section of core-shell type fibers according to one example embodiment;
FIG. 2 illustrates a cross-section of core-shell type fibers according to another example embodiment;
FIG. 3 to FIG. 7 illustrate a separator for a rechargeable battery according to one example embodiment;
FIG. 8 to FIG. 11 schematically illustrate a rechargeable battery according to one example embodiment; and
FIG. 12 illustrates an electrode for a rechargeable battery according to one example embodiment.

### DETAILED DESCRIPTION

Hereinafter, example embodiments of the present disclosure are described in detail. However, these are presented as examples, the present disclosure is not limited thereby, and the present disclosure is defined only by the scope of the claims described below.

Unless otherwise specified herein, when a part such as a layer, a film, a region, or a plate is described as being "on" another part, this includes not only a case where the part is "directly on" the other part, but also a case where another part is present therebetween.

Unless particularly stated otherwise, what is expressed in the singular may also include the plural. Additionally, unless otherwise specified, "A or B" may mean "including A, including B, or including A and B."

In the specification, "combination thereof" may mean a mixture, laminate, composite, copolymer, alloy, blend, and reaction product of components.

In the specification, "particle size (D50)" refers to an average particle size indicating the size of particles with a cumulative volume of 50 vol% in the particle size distribution. Particle size distribution may be measured by a method widely known to those of ordinary skill in the art. For example, the particle size distribution may be measured using a particle size analyzer, or by transmission electron microscopy (TEM) or scanning electron microscopy (SEM). As another method, by using a measuring device that uses dynamic light-scattering, particle size may be measured using dynamic light-scattering, the number of particles may be counted for each particle size range through data analysis, and the D50 value may be obtained by being calculated from the above method. Alternatively, the number of particles may be measured using a laser diffraction method. When measuring by laser diffraction, for example, particles to be measured may be dispersed in a dispersion medium, irradiated with approximately 28 kHz ultrasonic waves at an output of 60 W by introducing the dispersion medium into a commercially available laser diffraction particle size measuring device (e.g., Microtrac MT 3000), and D50 may be calculated based on 50% by volume of the particle size distribution using the measuring device.

If (when) the above particle is spherical, the above size may mean the diameter.

In the specification, "(meth)acryl" means acryl and/or methacryl.

In chemical formulas, the symbol "*" indicates a moiety that is connected to the same or different atoms, groups, or structural units. Unless specifically stated otherwise in a chemical formula shown herein, it may be assumed that hydrogen is bonded in the structure of the chemical formula.

When specifying a numerical range in the specification, "X to Y" means "X or more and Y or less (X ≤ and ≤ Y)."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, a separator for a rechargeable battery of the present disclosure and a rechargeable battery including the separator are described in detail.

Hereinafter, only rechargeable lithium batteries are described. However, the present disclosure may also be applied to rechargeable batteries of different metal ions in addition to rechargeable lithium batteries.

### Separator for rechargeable battery

A separator for a rechargeable battery according to an example embodiment (hereinafter also referred to as a "separator") has desired or improved heat resistance and thus reduces or prevents short circuits from occurring, thereby enhancing battery safety.

The separator may have a dry thermal shrinkage rate of about 1% or less, for example, in a range of about 0% to about 1%, and a thermal shrinkage rate in the electrolyte may be about 1% or less, for example, in a range of about 0% to about 1%. In the above ranges, the heat resistance of the separator is desired or improved, so that battery safety can increase.

The separator has desired or improved electrolyte wettability, so that the mobility of lithium ions is high and the electrolyte injection speed is fast, so that battery capacity can be improved. Here, "electrolyte wettability" means the degree to which the electrolyte is absorbed into the separator.

The separator may have an electrolyte wettability in a range of about 3.0 cm² to about 6.0 cm². In the above range, there may be an effect of improving battery capacity.

The separator has improved air permeability, thus increasing the mobility of lithium ions, ensuring a fast electrolyte injection speed, and enhancing battery stability. Here, "air permeability" means the time it takes for 100 cc of air to pass through the separator. The separator may have an air permeability of about 350 sec/100 cc or less, for example, in a range of about 80 sec/100 cc to about 120 sec/100 cc.

The separator may have a strength of about 500 kgf/cm² or more, for example, in a range of about 500 kgf/cm² to about 3000 kgf/cm², or 2800 kgf/cm² to 3000 kgf/cm². In the above range, battery safety can increase due to its strength against impacts or foreign substances.

The separator may have a thickness of about 10 µm or less, for example, in a range of about 6 µm to about 10 µm.

### First layer

The separator includes a first layer, wherein the first layer is or includes a fibrous layer. The fibrous layer can contribute to increasing the electrolyte wettability of the separator.

In the present specification, a "fibrous layer" may mean a layer formed by fibers forming a network like, e.g., a net. Here, the fibers may include one or more of nanofibers and microfibers, and for example may be or include nanofibers.

Although not particularly limited, the fibers may be manufactured by electrospinning. The electrospinning may be performed using conventional methods known to those skilled in the art. The electrospinning method is described in more detail below.

In one example embodiment, the fibers may have an aspect ratio of about 5 or more, for example, in a range of about 5 to about 10,000. In the above range, the fiber network may be readily formed, and thus may be used in a separator. Here, the "aspect ratio" of a fiber means the ratio of the average length to the average diameter of the fiber.

The first layer includes core-shell type fibers having a core and a shell surrounding the core. In one example embodiment, the first layer may be or include a fibrous layer made of or including the core-shell type fibers.

The core-shell type fiber may include different materials in each of the core and the shell, and has high strength due to the core-shell structure, thereby increasing the mechanical strength of the first layer. In one example embodiment, the core-shell type fibers may be included in the first layer in an amount of about 95 wt% or more, for example, in a range of about 95 wt% to about 100 wt%, or 100 wt%.

The cross-section of the core-shell type fiber may be circular, elliptical, or amorphous, but is not necessarily limited thereto.

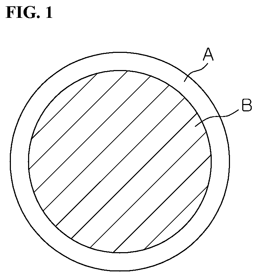

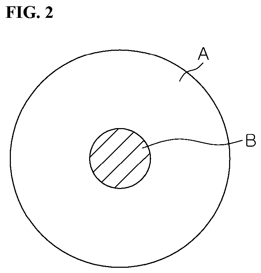

FIG. 1 and FIG. 2 each illustrate a cross-section of a core-shell type fiber.

Referring to FIG. 1, in the core-shell type fiber, a diameter of a core "B" may be significantly larger than a thickness of a shell "A." Alternatively, referring to FIG. 2, in the core-shell type fiber, the diameter of the core "B" may be significantly smaller than the thickness of the shell "A." For example, as shown in FIG. 1, the diameter of the core "B" is significantly larger than the thickness of the shell "A" so that desired or improved heat resistance properties and a better effect of controlling air permeability by compression can be achieved.

The core includes a polyimide-based resin, and the shell includes a polysilsesquioxane-based resin.

The core-shell combination of the polyimide-based resin and the polysilsesquioxane-based resin may be manufactured by electrospinning the fibers even without using a core-shell type nozzle. For example, when electrospinning a mixture of the polyimide-based resin and the polysilsesquioxane-based resin, core-shell type fibers may be formed independently due to the difference in viscosity between the polyimide-based resin and the polysilsesquioxane-based resin, but the present disclosure is not limited thereto. Here, the "core-shell type nozzle" may mean having a core nozzle and a shell nozzle having a predetermined or desired thickness and surrounding the core nozzle.

The core-shell type fibers include a polyimide-based resin in the core and a polysilsesquioxane-based resin in the shell, thereby lowering the dry thermal shrinkage rate of the separator and the thermal shrinkage rate in the electrolyte, thereby improving the heat resistance of the separator, and increasing electrolyte wettability, thereby improving battery capacity. Polyimide-based resins are generally known to have desired or improved heat resistance. However, by including the polysilsesquioxane-based resin in the shell in the core-shell structure, heat resistance can be further increased, and electrolyte wettability can be further increased to improve battery capacity.

In one example embodiment, the polyimide-based material may be included in the core in an amount of about 95 wt% or more, for example, in a range of about 95 wt% to about 100 wt% or 100 wt%. In one example embodiment, the polysilsesquioxane-based material may be included in the shell in an amount of about 95 wt% or more, for example, in a range of about 95 wt% to about 100 wt% or 100 wt%. In the above ranges, the above-described separator effects may be readily implemented.

The core-shell type fibers have an average diameter of about 30 nm or more and about 200 nm or less. When an average diameter of the fibers is less than about 30 nm, the strength of the separator may be low, and the effects of improving heat resistance and electrolyte wettability may be low or minimal. When the average diameter of the fibers exceeds about 200 nm, the diameter of the fibers may be too large, causing the pore size between the fibers to become small, which may weaken the physical properties of the separator for a rechargeable lithium battery. For example. The core-shell type fibers may have an average diameter of about 30, 35, 40, 35, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 nm.

For example, the average diameter of the fibers may be about 100 nm or more and about 120 nm or less, 130 nm or more and 150 nm or less, or 150 nm or more and 200 nm or less. In the above range, heat resistance and electrolyte wettability are significantly improved, and fiber manufacturing is possible under relatively easy conditions.

In the present specification, the "average diameter" of the fibers may be the average value of the diameter of the fibers. For example, the average diameter may be obtained by pulling a range of about 10 fibers to about 30 fibers out of the layers or selecting a range of about 10 cross-sections to about 30 cross-sections from the cross-sections of the fibers, measuring each diameter using a microscope or the like, and calculating the average of the resulting diameters. The "diameter" of the fiber may mean a normal diameter when the cross-section of the fiber is circular, and the longest diameter, which is the largest value among the diameters measured in the cross-section, when the cross-section of the fiber is not circular but oval or amorphous.

The average diameter of the core-shell type fibers may be controlled by controlling the content ratio between the polyimide-based resin and the polysilsesquioxane-based resin in the electrospinning solution for manufacturing the core-shell type fibers, or by controlling the voltage and/or needle size during electrospinning.

In one example embodiment, the core in the core-shell type fibers may have a diameter of about 120 nm or more and about 140 nm or less, for example, 125 nm or more and 135 nm or less, and the shell may have a thickness of about 10 nm or more and about 30 nm or less, for example, 15 nm or more and 25 nm or less for example 10, 15, 20, 25, 30 nm.

In the core-shell type fibers, the core may be included in an amount in a range of about 10 wt% to about 95 wt%, for example, 10,11,12,13,14,15,16,17,18,19,20,21,22,23,24,25,26,27,28,29,30,31,32,33,34,35,36,37,38,39,40, 41,42,43,44,45,46,47,48,49,50,51,52,53,54,55,56,57,58,59,60,61,62,63,64,65,66,67,68,69,70,71, 72,73,74,75,76,77,78,79,80,81,82,83,84,85,86,87,88,89,90,91,92,93,94,95 wt%, 10 wt% to 90 wt% or 60 wt% to 90 wt%, and the shell may be included in an amount in a range of about 5 wt% to about 90 wt%, for example, 5,6,7,8,9,10,11,12,13,14,15,16,17,18,19,20,21,22,23,24,25,26,27,28,29,30,31,32,33,34,35,36,37, 38,39,40,41,42,43,44,45,46,47,48,49,50,51,52,53,54,55,56,57,58,59,60,61,62,63,64,65,66,67,68, 69,70,71,72,73,74,75,76,77,78,79,80,81,82,83,84,85,86,87,88,89,90 wt%, 5 wt% to 50 wt%, 10 wt% to 50 wt% or 10 wt% to 20 wt%. In the above range, the separator effects may be readily implemented.

The polyimide-based material may include an oligomer, a polymer, a copolymer, or a combination thereof having polyimide-based units. The polysilsesquioxane-based material may include an oligomer, a polymer, a copolymer, or a combination thereof having polysilsesquioxane-based units. This is described in detail below.

### Polyimide-based material

The polyimide-based material can contribute to increasing the heat resistance of the separator. In addition, the polyimide-based material can contribute to improving the electrolyte wettability of the separator together with the shell including the polysilsesquioxane-based material.

The polyimide-based material may include a repeating unit of the following Chemical Formula 1:

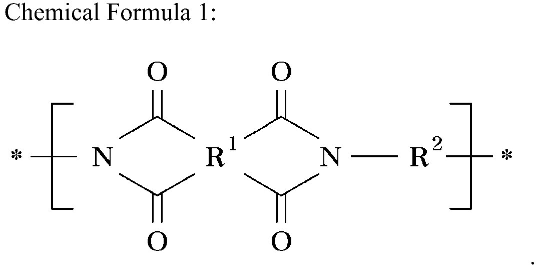

In Chemical Formula 1,
* indicates a connecting site of an element,
R¹ is or includes a tetravalent organic group, and
R² is or includes a divalent aliphatic, alicyclic, and aromatic organic group having a total of a range of about 3 carbon atoms to about 30 carbon atoms, or a combination thereof.

In one example embodiment, R¹ in Chemical Formula 1 may be or include at least one of moieties of the following chemical formulas: 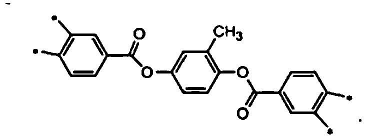 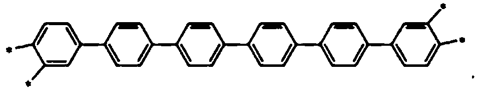 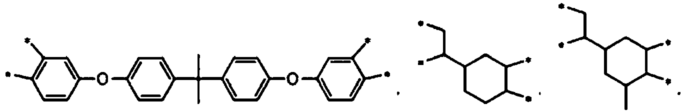 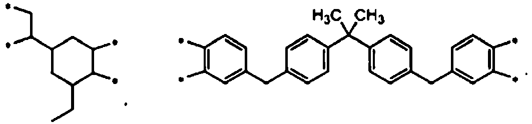 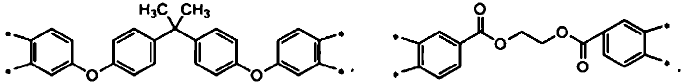 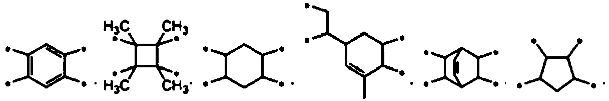 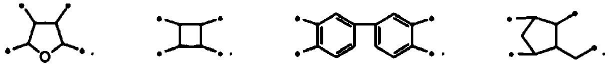 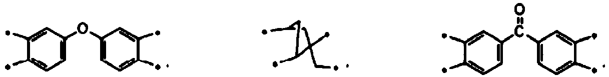 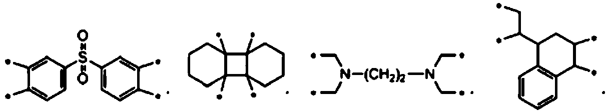 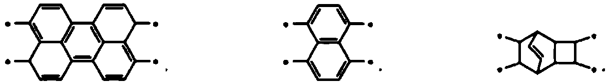 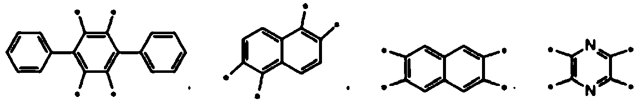 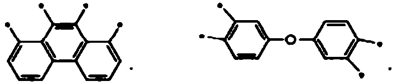 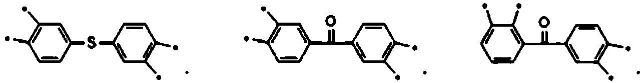 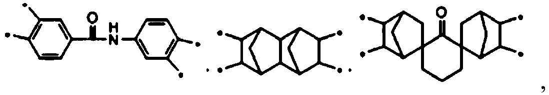 and

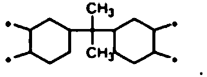

Here, * indicates a connecting site of an element.

For example, R¹ in Chemical Formula 1 may be or include a combination of compounds corresponding to one or more of Chemical Formulas 1-1 and 1-2 below.

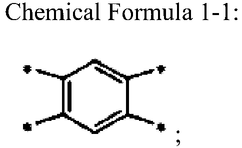

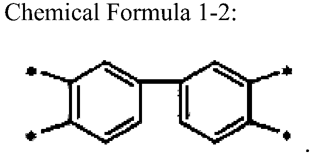

In Chemical Formula 1, R² may be or include an alkylene group having a range of about 3 carbon atoms to about 30 carbon atoms, a cycloalkylene group having a range of about 3 carbon atoms to about 30 carbon atoms, an arylene group having a range of about 6 carbon atoms to about 30 carbon atoms, or a combination thereof.

Alternatively, R² in Chemical Formula 1 may be or include an alkylene group having a range of about 3 carbon atoms to about 30 carbon atoms, a cycloalkylene group having a range of about 3 carbon atoms to about 30 carbon atoms, an arylene group having a range of about 6 carbon atoms to about 30 carbon atoms, or a combination thereof, and each of which may have a linking group such as or including at least one of -O-, -SO₂-, -CO-, -CH₂-, -C(CH₃)₂-, -OSi(CH₃)₂-, -C₂ H₄O-, and -S-.

For example, R² in Chemical Formula 1 may be or include an arylene group having a range of about 6 carbon atoms to about 10 carbon atoms, or an arylene group having a range of about 6 carbon atoms to about 10 carbon atoms or a combination thereof, which has a linking group such as or including at least one of -O-, -SO₂-, -CO-, -CH₂-, -C(CH₃)₂-, -OSi(CH₃)₂-, -C₂ H₄O-, and -S-.

In one example embodiment, the polyimide-based material may include one or more units of compounds corresponding to the following Chemical Formulas 1-3 (for example Chemical Formula 1-3-1) and 1-4 (for example Chemical Formula 1-4-1). These materials can significantly improve the effects of the above-described separator.

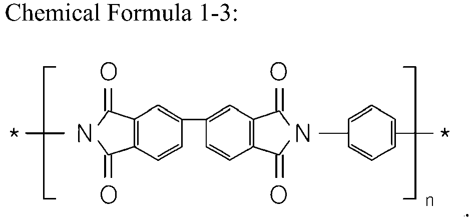

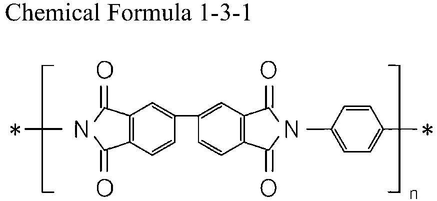

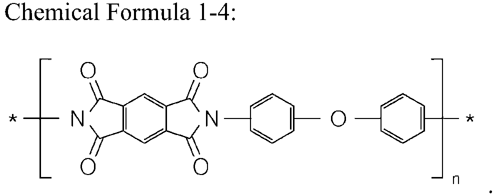

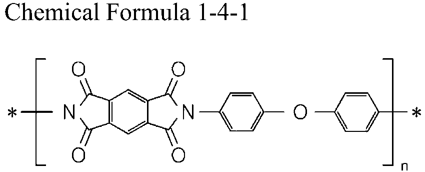

In the above chemical formulas 1-3 and 1-4, * indicates a connecting site of an element, and n is the number of moles of the unit in the material.
n may be 1 to 1,000,000.

In one example embodiment, the polyimide-based material may be prepared by heat-treating a polyamic acid prepared by polymerizing one or more dianhydrides represented by Chemical Formulas 1-5 to 1-13 below and one or more diamines represented by Chemical Formulas 1-14 to 1-26 below. Here, heat treatment may be performed during the process of manufacturing the fiber or manufacturing the separator. The heat treatment may be or include an imidization reaction.

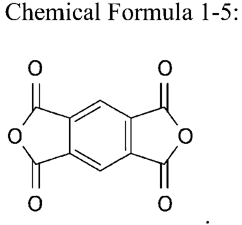

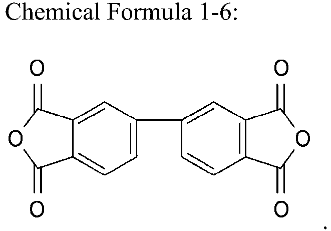

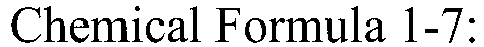

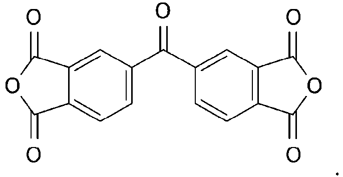

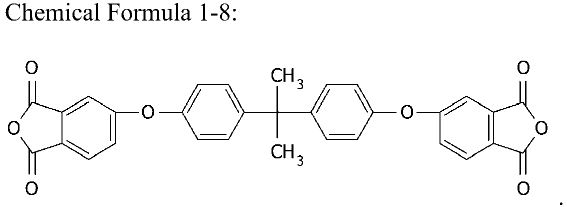

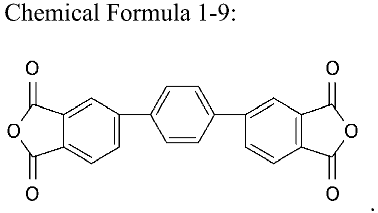

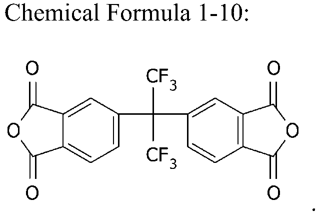

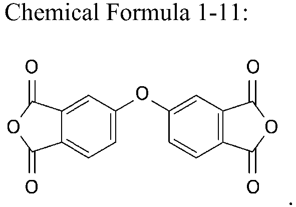

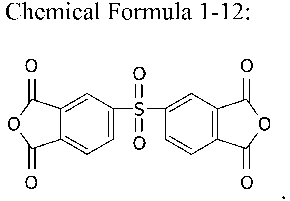

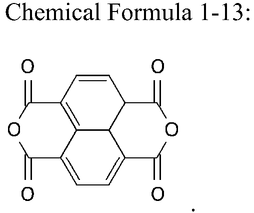

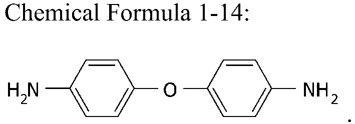

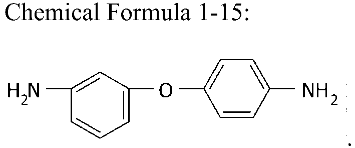

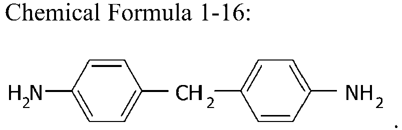

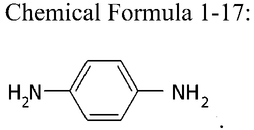

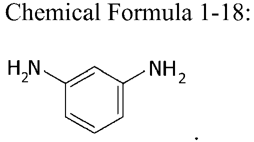

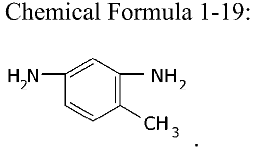

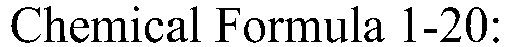

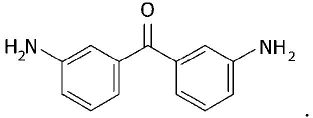

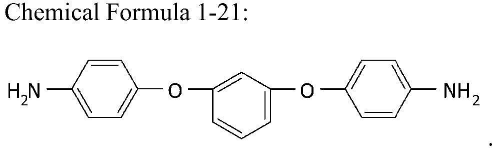

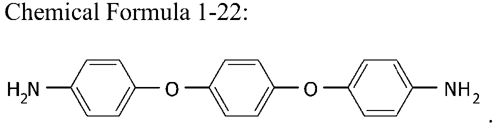

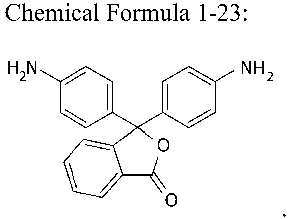

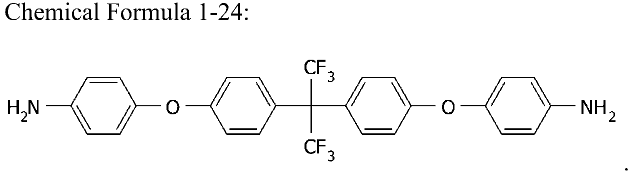

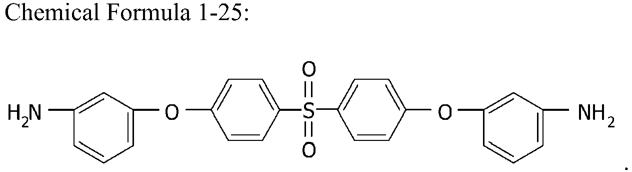

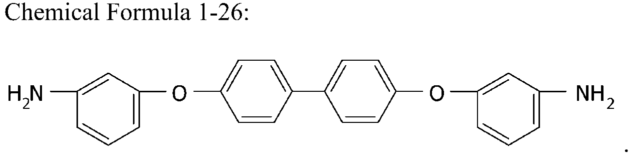

In one example embodiment, the polyimide-based material may have a weight average molecular weight in a range of about 100,000 g/mol to about 300,000 g/mol, for example, 200,000 g/mol to 250,000 g/mol. In the above range, the viscosity of the polyimide-based material can be readily controlled. In this specification, the "weight average molecular weight" may be obtained as a polystyrene-converted value by, e.g., gel permeation chromatography.

In one example embodiment, the polyimide-based material may further include a functional group capable of being crosslinked by heat and/or light. The crosslinkable functional group may include a crosslinkable functional group described in the polysilsesquioxane-based material below. The crosslinkable functional group can further improve the heat resistance, strength, and electrolyte wettability of the separator by enabling crosslinking between the polyimide-based material and the polysilsesquioxane-based material described below during the separator manufacturing process.

The polyimide-based material may be prepared by a conventional method known to those skilled in the art.

### Polysilsesquioxane-based material

The polysilsesquioxane-based material may facilitate the preparation of core-shell type fibers without using a core-shell nozzle together with the polyimide-based material. In addition, the polysilsesquioxane-based material can contribute to improving the electrolyte wettability of the separator together with the core including the polyimide-based material.

The polysilsesquioxane-based material may be a random type, ladder type, cage type, or partial cage type.

In one example embodiment, the polysilsesquioxane-based material may be or include a non-crosslinkable material that is not cured by heat and/or light.

In another example embodiment, the polysilsesquioxane-based material may be or include a crosslinkable material that is cured by heat and/or light. The crosslinkable material may be cured without adding a separate crosslinking process by being crosslinked by heat and/or light during a manufacturing process of the separator. In addition, the crosslinkable material may further increase the strength of the separator by being crosslinked with the polyimide-based material during the manufacturing process of the separator.

The polysilsesquioxane-based material may have a unit of the following Chemical Formula 2:

Chemical Formula 2: RSiO_{2/3}:ₙ.

In Chemical Formula 2,
R is independently hydrogen, a hydroxyl group, an alkyl group having a range of about 1 carbon atoms to about 20 carbon atoms, an alkenyl group having a range of about 2 carbon atoms to about 20 carbon atoms, an alkynyl group having a range of about 2 carbon atoms to about 20 carbon atoms, a cycloalkyl group having a range of about 3 carbon atoms to about 20 carbon atoms, an aryl group having a range of about 6 carbon atoms to about 20 carbon atoms, an arylalkyl group having a range of about 7 carbon atoms to about 20 carbon atoms, a crosslinkable functional group, or a combination thereof, and
n is the number of moles of the unit.
n may be 1 to 1,000,000.

In the polysilsesquioxane-based material, R among the units of Chemical Formula 2 may be the same or different.

In Chemical Formula 2, the crosslinkable functional group is or includes a functional group that can be crosslinked by heat and/or light, and may be or include at least one of a (meth)acryl group, a (meth)acryloxyalkyl group, a glycidoxy group, or a glycidoxyalkyl group, or a combination thereof.

In one example embodiment, the crosslinkable functional group may be or include one or more compounds corresponding to one or more of the following Chemical Formulas 2-1 and 2-2:

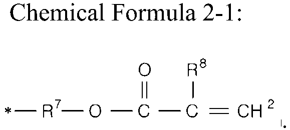

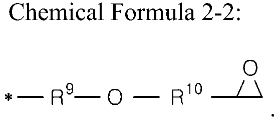

In Chemical Formulas 2-1 and 2-2,
R⁸ is hydrogen or a methyl group, and
R⁷, R⁹, and R¹⁰ are each independently an alkylene group having a range of about 1 carbon atoms to about 20 carbon atoms.

In one example embodiment, the polysilsesquioxane-based material may include a unit of the following Chemical Formula 2-3:

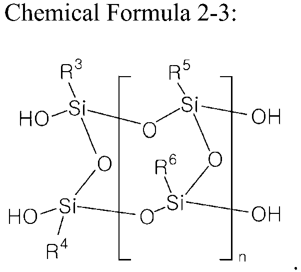

In Chemical Formula 2-3,
R³, R⁴, R⁵, and R⁶ are each independently hydrogen, a hydroxyl group, an alkyl group having a range of about 1 carbon atoms to about 20 carbon atoms, an alkenyl group having a range of about 2 carbon atoms to about 20 carbon atoms, an alkynyl group having a range of about 2 carbon atoms to about 20 carbon atoms, a cycloalkyl group having a range of about 3 carbon atoms to about 20 carbon atoms, an aryl group having a range of about 6 carbon atoms to about 20 carbon atoms, an arylalkyl group having a range of about 7 carbon atoms to about 20 carbon atoms, a crosslinkable functional group, or a combination thereof, n is the number of moles of the unit.
n may be 1 to 1,000,000.

In Chemical Formula 2-3, the crosslinkable functional group is the same as defined in Chemical Formula 2.

For example, in Chemical Formula 2-3, R³, R⁴, R⁵, and R⁶ may each independently be or include at least one of a hydroxyl group, an aryl group having 6 to 20 carbon atoms, an arylalkyl group having a range of about 7 carbon atoms to about 20 carbon atoms, a crosslinkable functional group, or a combination thereof.

For example, the polysilsesquioxane-based material may include a unit of the following Chemical Formula 2-4:

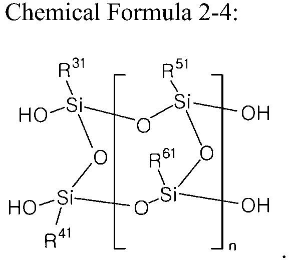

In Chemical Formula 2-4,
R³¹, R⁴¹, R⁵¹, and R⁶¹ are each independently at least one of hydrogen, a hydroxyl group, an alkyl group having a range of about 1 carbon atoms to about 20 carbon atoms, an alkenyl group having a range of about 2 carbon atoms to about 20 carbon atoms, an alkynyl group having a range of about 2 carbon atoms to about 20 carbon atoms, a cycloalkyl group having a range of about 3 carbon atoms to about 20 carbon atoms, an aryl group having a range of about 6 carbon atoms to about 20 carbon atoms, an arylalkyl group having a range of about 7 carbon atoms to about 20 carbon atoms, a crosslinkable functional group, or a combination thereof,
at least one of R³¹, R⁴¹, R⁵¹, and R⁶¹ is a crosslinkable functional group or a combination thereof, and
n is the number of moles of the unit.
n may be 1 to 1,000,000.

In Chemical Formula 2-4, the crosslinkable functional group may be the same as defined in Chemical Formula 2. In one example embodiment, the crosslinkable functional group in Chemical Formula 2-4 may be Chemical Formula 2-1 or 2-2.

In the polysilsesquioxane-based material, in Chemical Formula 2-4, R³¹, R⁴¹, R⁵¹, and R⁶¹ are each independently at least one of an aryl group having a range of about 6 carbon atoms to about 20 carbon atoms, for example, a phenyl group, a crosslinkable functional group, or a combination thereof, and at least one of R³¹, R⁴¹, R⁵¹, and R⁶¹ may be or include a crosslinkable functional group or a combination thereof.

For example, the crosslinkable functional group may be one or more of Chemical Formulas 2-5 and 2-6:

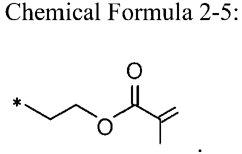

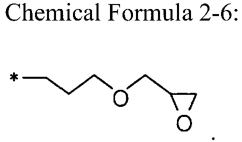

In the above Chemical Formula 2-5 and 2-6, * indicates a connecting site of an element.

The polysilsesquioxane-based material may have a weight average molecular weight in a range of about 10,000 g/mol to about 30,000 g/mol, for example, 15,000 g/mol to 20,000 g/mol. In the above range, the viscosity of the polysilsesquioxane-based material may be readily controlled.

The first layer may have a thickness of about 5 µm or more, for example, in the range of about 6 µm to about 10 µm. In the above range, the first layer may facilitate strength by being included in the separator.

The first layer may be manufactured by electrospinning an electrospinning solution containing the polyimide-based material and the polysilsesquioxane-based material onto a substrate or a release film. The electrospinning method is described in more detail below. After the electrospinning, solvent drying and removal of the substrate or release film may be performed.

The fibers may further include, in addition to the polyimide-based material and the polysilsesquioxane-based material, one or more of polyvinylidene fluoride (PVDF), polyacrylonitrile (PAN), polyamideimide (PAI), polyvinylpyrrolidone (PVP), polyacrylic acid (PAA), polyvinyl alcohol (PVA), an aramid-based polymer, and a polyurethane-based resin. The material may be included in one or more of the core and the shell of the fibers.

In one example embodiment, the fibers may further include a resin having a low melting point relative to the imidization reaction temperature. The resin has a melting point of about 250 °C or lower, and may be or include, for example, polyvinylidene fluoride and the like.

In one example embodiment, the fibers may further include a polyurethane-based resin in one or more of the core and the shell.

In one example embodiment, the fibers may further include an aramid-based resin in one or more of the core and the shell.

The fiber may further include additives such as a phosphorus-based flame retardant, and the like. This can further enhance the flame retardancy of the fibers and a separator including the fibers. The phosphorus-based flame retardant may include one or more of ammonium dihydrogen phosphate and ammonium polyphosphate.

### Diversification of separator structure

The separator may be a single-layer or multi-layer separator.

In one example embodiment, the separator may be composed of a first layer alone. For example, the separator may be a single-layer separator composed of only the first layer, or a multilayer separator in which the first layer is laminated multiple times.

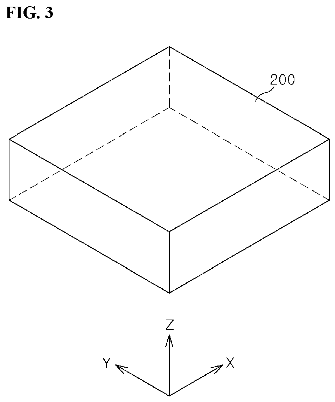

FIG. 3 illustrates a separator in which one first layer 200 is laminated.

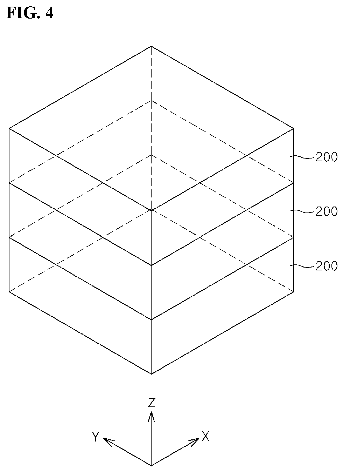

FIG. 4 illustrates a separator in which three first layers 200 are laminated. As shown in FIG. 4, the separator includes three first layers 200. Although not shown in FIG. 4, the electrospinning direction of each first layer 200 may be the same or different. Although not shown in FIG. 4, each first layer 200 may be laminated so that each first layer 200 is not separated by compressing or the like.

In another example embodiment, the separator may further include a heterogeneous layer in addition to the first layer. For convenience, the heterogeneous layer is called a second layer.

The second layer may be or include a fibrous layer as defined above, a non-fibrous layer, or a combination thereof.

When the second layer is a fibrous layer:
The separator may include one or more first layers and one or more second layers.

The second layer may also be a fibrous layer as defined above.

The second layer may include one or more of core-shell type fibers and non-core-shell type fibers.

The fibers of the second layer may be manufactured by electrospinning, and there may be no particular limitation as long as the fibers do not affect the effect of the separator.

The fibers of the second layer may include one or more of polyacrylonitrile, polyaniline, polypyrrole, polyrhodanine, melamine, polyurea, polyvinyl chloride, polyvinyl alcohol, polyethylene oxide, polymethyl methacrylate, polyacrylic acid, polylactic acid, polyimide, polyamideimide, polyaramid, polybenzylimidazole, polypropylene, resorcinol-formaldehyde resin, melamine-formaldehyde resin, pitch, sucrose, glucose, cellulose, and polyvinylidene fluoride. For example, the fibers of the second layer may be polyimide. For example, the fibers of the second layer may be the same as, or different from, the polyimide-based material of the first layer.

In one example embodiment, the fibers of the second layer may be polyimide, or a mixture including about 50 wt% or more of polyimide. This second layer can increase the heat resistance of the separator, and when combined with the first layer, can be advantageous in lowering the resistance of the battery, enhancing adhesion, lowering the shutdown temperature, and increasing processability.

In another example embodiment, the fibers of the second layer may be polyvinylidene fluoride, or a mixture including about 50 wt% or more of polyvinylidene fluoride. This second layer can enhance the flexibility of the separator and further enhance the adhesion of the separator.

In another example embodiment, the fibers of the second layer may be or include a mixture including about 50 wt% of polyimide and polyvinylidene fluoride. This second layer can enhance the flexibility of the separator, further enhance the adhesion of the separator, and improve the processability of the separator by offsetting the brittleness of polyimide.

The fibers in the second layer may have an average diameter of about 30 nm or more and about 200 nm or less. In the above range, the separator may have desired or improved air permeability, and electrolyte wettability may not be affected. For example, an average diameter of the fibers may be about 100 nm or more and 1 about 20 nm or less, 130 nm or more and 150 nm or less, or 150 nm or more and 200 nm or less. In the above range, heat resistance and electrolyte wettability are significantly improved, and fiber manufacturing is possible under relatively easy conditions.

In one example embodiment, the separator may not include a porous substrate. The porous substrate is manufactured by stretching or the like, and may experience thermal shrinkage and melting at high temperatures, which may cause shrinkage of the overhang in the separator when the battery is exposed to heat, resulting in a short circuit. Accordingly, the separator has a thin thickness and does not suffer from short circuit problems due to thermal shrinkage and meltdown at high temperatures caused by the porous substrate, so battery safety may be high.

Here, the "porous substrate" may refer to a substrate used in the manufacture of a separator, for example, a porous polyolefin-based substrate including a polyethylene-based substrate or a polypropylene-based substrate.

When the second layer is a non-fibrous layer:
The separator may include one or more first layers and one or more second layers.

The second layer may be or include a coating layer including a combination of a binder including a heat-resistant binder or an adhesive binder, and/or a filler, as known in the art.

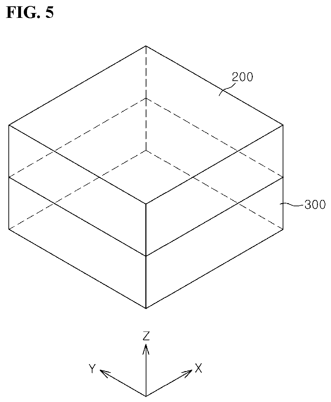

FIG. 5 to FIG. 7 illustrate a separator according to one example embodiment of the present disclosure.

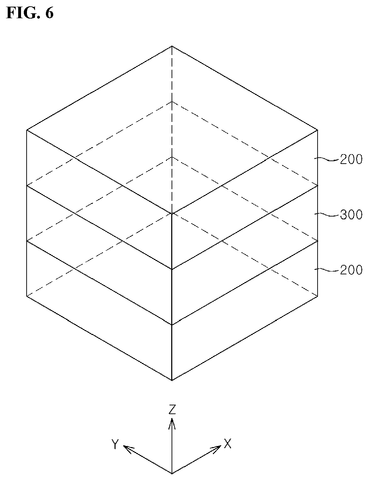

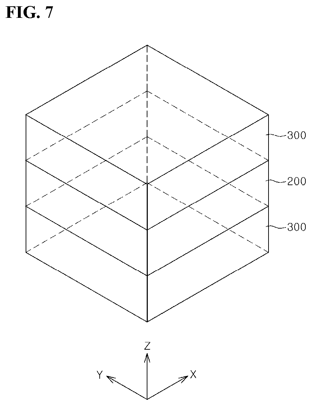

Referring to FIG. 5, the separator may be or include a two-layer separator including a first layer 200 and a second layer 300. Referring to FIG. 6, the separator may be or include a three-layer separator including a first layer 200, a second layer 300, and a first layer 200. Referring to FIG. 7, the separator may be or include a three-layer separator including a second layer 300, a first layer 200, and a second layer 300.

### Electrospinning

The first layer and the second layer, which is a fibrous layer, may each be manufactured by, e.g., electrospinning. The electrospinning may be performed using conventional methods known to those skilled in the art.

Manufacture of first layer:
An electrospinning solution for manufacturing the first layer may include a mixture of the polyimide-based material and the polysilsesquioxane-based material. Here, the polyimide-based material may be a separately synthesized polyimide-based material, or may be the polyamic acid material.

In the above mixture, the weight average molecular weight of each of the polyimide-based material and the polysilsesquioxane-based material, and the weight ratio between these materials in the mixture are controlled, so that the core-shell type fibers may be manufactured without a core-shell type nozzle. The weight ratio may be adjusted depending on the diameter of the core and the thickness of the shell in the core-shell type fibers.

The electrospinning solution may further include a solvent to facilitate dispersion and dissolution of the polyimide-based material and the polysilsesquioxane-based material. The solvent may include, but is not limited to, at least one of methylformamide, dimethylacetamide, dimethyl sulfoxide, and methylpyrrolidone. To enhance the dispersion and dissolution, stirring and/or heating may be additionally performed.

The electrospinning may be for example performed in a space having an internal temperature of about 25°C or higher, for example, in a range of about 25°C to about 60°C. In the above range, the degree of solvent volatilization in the electrospinning solution is high, so that there is no residual solvent, thereby reducing the effect of the solvent on the battery.

The electrospinning may be performed by positioning one nozzle pack consisting of a tip having a needle size in a range of about 23G (gauge) to about 30G and a collecting roller at a predetermined or desired interval, adding the electrospinning solution to the tip, positioning the substrate on the collecting roller, and then applying a voltage in a range of about 35 kV to about 90 kV to the tip. The gap between the nozzle pack and the collecting roller may be in a range of about 10 cm to about 20 cm. When the needle size of the tip is in a range of about 25G to about 30G, the needle size of the tip may be suitable because the first fibrous layer may be formed in the desired shape.

According to the electrospinning process, the electrospinning solution is spun and stretched into a fiber shape, so that a layer including nanofibers may be formed on the substrate. For example, the electrospinning solution hangs in the form of a droplet at the tip due to surface tension, and when voltage is applied, charges accumulate on the surface of the solution and a repulsive force between charges is generated. When the critical voltage at which the repulsive force between charges exceeds the surface tension of the solution is reached, a conical Taylor cone is generated, and a jet of the electrospinning solution is ejected from the tip of the cone, and the jet is highly stretched to form nanofibers, which are then collected on the substrate to form a fibrous layer.

The air pressure at the nozzle may be about 1 MPa or more. In the above range, the degree of solvent volatilization is high, so that the effect of the residual solvent on the battery may be reduced.

It may be desirable to appropriately control the tip air so that interference between tips may be reduced or minimized and electrospinning may occur uniformly. The tip air may be adjusted by flowing compressed air at a pressure in a range of about 0.1 MPa to about 0.3 MPa.

The roller speed of the collecting roller may be adjusted so that the fibrous layer may be formed to an appropriate thickness, and may be, for example, a speed in a range of about 1 m/min to about 3 m/min. In addition, the flow rate of the electrospinning solution discharged from the tip may be adjusted to discharge at a rate in a range of about 20 µl/min to about 200 µl/min. In one example embodiment, after performing the electrospinning process, a drying process (heat treatment) may be performed at a temperature in a range of about 50 °C to about 120 °C.

Manufacture of second layer:
When the second layer is a fibrous layer, the second layer may be manufactured by electrospinning an electrospinning solution including the fibers included in the second layer.

The electrospinning may be performed with reference to the method described above.

Manufacture of separator:
The separator may be manufactured by manufacturing the fibrous layer, and then pressing the fibrous layer.

According to one example embodiment, the separator may be manufactured by separately manufacturing a plurality of fibrous layers, sequentially laminating the manufactured plurality of fibrous layers, and then compressing the layers.

According to another example embodiment, the separator may be manufactured by injecting an electrospinning solution containing the copolymer into sequentially located nozzles, and then sequentially spinning and simultaneously or contemporaneously compressing the copolymer.

The compressing is not particularly limited, but may be performed by compressing using a roller or the like.

### Rechargeable battery

According to one example embodiment, the rechargeable battery includes the separator for a rechargeable battery, a positive electrode, and a negative electrode.

The separator for rechargeable battery refers to the description described above. The separator for a rechargeable battery may be positioned between the positive electrode and the negative electrode.

### Positive electrode

A positive electrode for a rechargeable battery may include a current collector and a positive electrode active material layer on the current collector. The positive electrode active material layer may include a positive electrode active material, and may further include a binder and/or a conductive material.

For example, the positive electrode may further include an additive that can constitute a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of about 90 wt% to about 99.5 wt% based on 100 wt% of the positive electrode active material layer. Amounts of the binder and the conductive material may be in a range of about 0 wt% to about 5 wt%, about 0.5 wt% to about 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

### Negative electrode

The negative electrode for a rechargeable battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable battery may further include an electrolyte solution.

### Electrolyte Solution

The electrolyte solution for a rechargeable battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on the shape thereof.

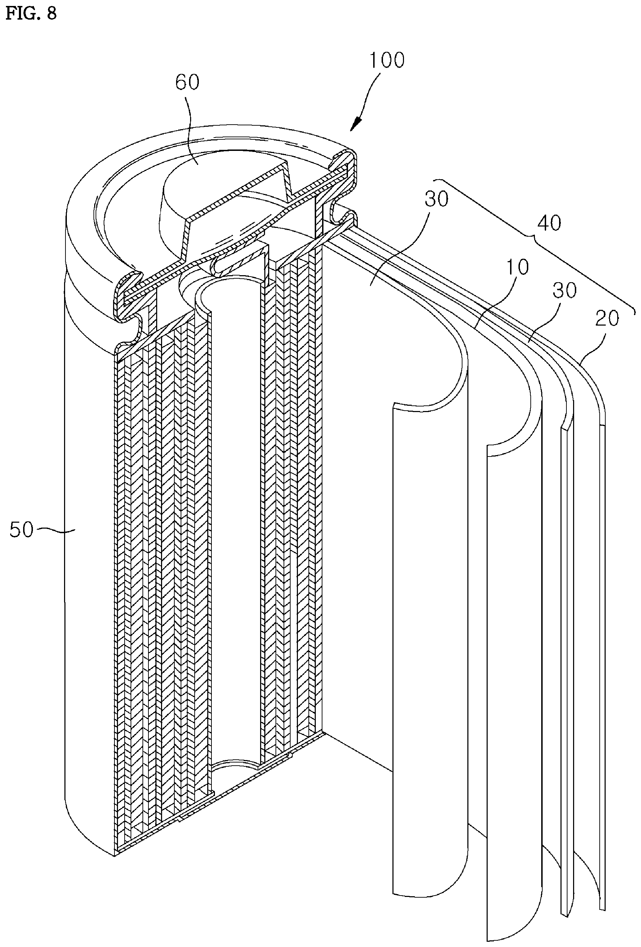

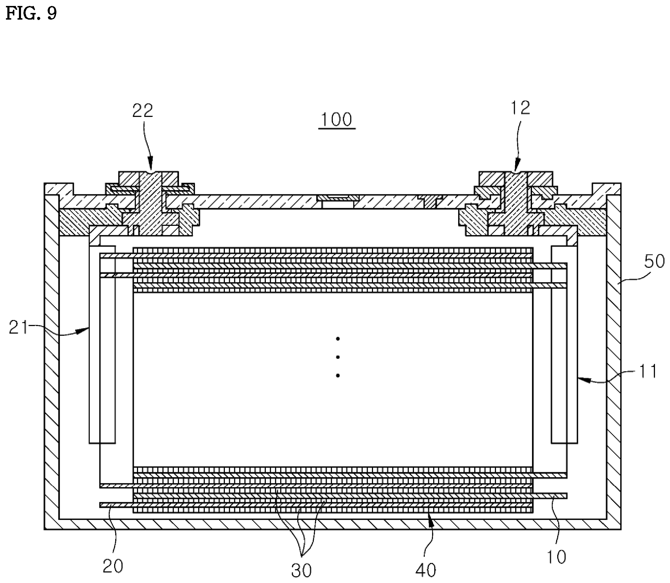

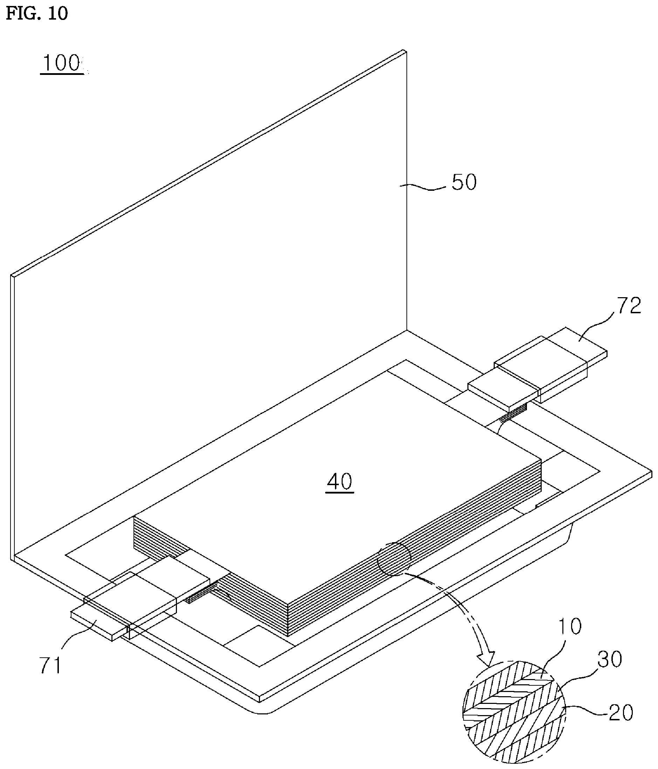

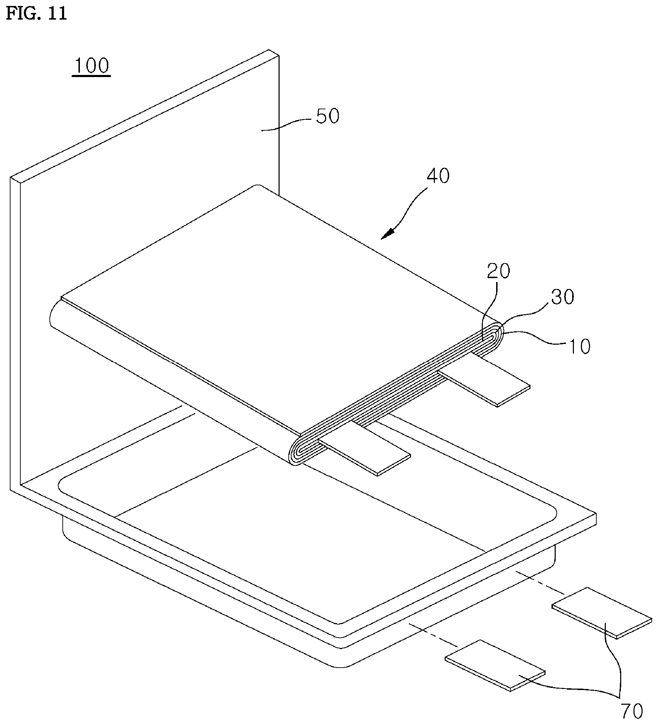

FIG. 8 to FIG. 11 are schematic views illustrating a rechargeable lithium battery according to an example embodiment. FIG. 8 shows a cylindrical battery, FIG. 9 shows a prismatic battery, and FIG. 10 and FIG. 11 show pouch-type batteries. Referring to FIG. 8 to FIG. 11, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 8. In FIG. 9, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 10 and FIG. 11, the rechargeable lithium battery 100 may include an electrode tab 70 illustrated in FIG. 11, or for example, a positive electrode tab 71 and a negative electrode tab 72 illustrated in FIG. 10, the electrode tabs 70/71/72 forming an electric path for inducing the current formed in the electrode assembly 40 to the outside of the battery 100.

The rechargeable battery according to an example embodiment may be applied to, e.g., automobiles, mobile phones, and/or various types of electric devices, as non-limiting examples.

In the above, only the case where the rechargeable battery separator is included in the battery separately from the electrode (e.g., positive electrode or negative electrode) has been described. However, the separator for a rechargeable battery may be integrated with the electrode and included in the battery.

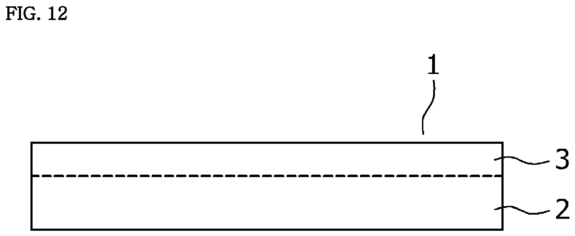

In this regard, FIG. 12 shows a cross-sectional view of an electrode for a rechargeable battery according to one example embodiment. Referring to FIG. 12, an electrode 1 for a rechargeable battery may include an active material layer 2 for the rechargeable battery and a separator 3 integrated with one surface of the active material layer 2.

In FIG. 12, the active material layer 2 and the separator 3 for a rechargeable lithium battery are shown as being formed as separate layers, but the dotted line indicates that the active material layer 2 and the separator 3 for a rechargeable lithium battery may be integrated with each other.

In one example embodiment, the fibers may further include, in addition to the polyimide-based material and the polysilsesquioxane-based material, one or more of polyvinylidene fluoride (PVDF), polyacrylonitrile (PAN), polyamideimide (PAI), polyvinylpyrrolidone (PVP), polyacrylic acid (PAA), polyvinyl alcohol (PVA), and an aramid-based polymer. The polyimide-based material and the polysilsesquioxane-based material may be included in one or more of the core and the shell of the fibers.

In FIG. 12, the separator 3 is depicted as one layer. However, the separator 3 may include a plurality of laminated layers.

A rechargeable battery according to one example embodiment of the present disclosure may be applied to automobiles, mobile phones, and/or various types of electrical devices, but the present disclosure is not limited thereto.

The present disclosure may be applied to various types of electrical devices using batteries.

An electrical device according to one example embodiment of the present disclosure may include an electric vehicle, a hybrid electric vehicle (HEV), a plug-in hybrid electric vehicle (PHEV), an electric bicycle, an electric scooter (E-scooter), an electric golf cart, and other vehicles that can utilize a battery pack as a fuel source.

An electrical device according to one example embodiment of the present disclosure may include a power device including an energy storage system using a battery, and an apparatus and equipment related to the energy storage system.

An electrical device according to one example embodiment of the present disclosure may include a power tool, and the power tool may include a metal-cutting electric tool, a grinding electric tool, an assembling electric tool, and a railway power tool, and may include any apparatus powered by a battery-based motor, such as an electric drill, an electric grinder, an electric wrench, an electric screwdriver, an electric hammer, an impact electric drill, a concrete vibrator, and an electric planer.

An electrical device according to one example embodiment of the present disclosure may include applications that use batteries, such as mobile phones, tablet computers, notebook computers, wearable devices, electric toys, mobile electric toys, game consoles, ships, airplanes, spacecraft, drones, and robots.

Hereinafter, examples and comparative examples of the present disclosure are described. However, the following examples are only example embodiments of the present disclosure, and the present disclosure is not limited to the following examples.

### Example 1

### Preparation of electrospinning solution for core-shell type fibers

4,4'-biphthalic anhydride (BPDA) and p-phenylenediamine (pPDA) were polymerized to prepare polyamic acid, and dimethylacetamide as a solvent was mixed to prepare an electrospinning solution for a core. The polyamic acid can provide a polyimide unit of Chemical Formula 1-3-1 below in heat treatment during electrospinning as described below.

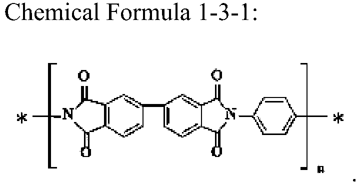

Dimethylacetamide was mixed with polysilsesquioxane in which R³¹, R⁴¹, R⁵¹, and R⁶¹ in Chemical Formula 2-4 below all have the structure of Chemical Formula 2-5 below to prepare an electrospinning solution for a shell.

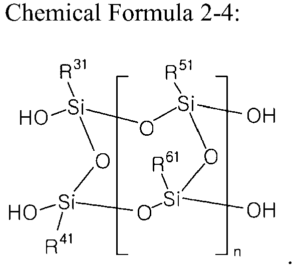

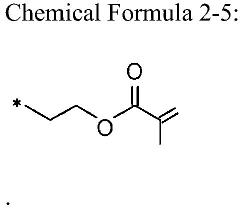

### Electrospinning and separator manufacturing

An electrospinning device equipped with a first nozzle located along the direction of movement of a substrate (polyethylene film) was prepared. The first nozzle has one spinning hole that was not divided into a core and a shell. The prepared electrospinning solution for the core and the electrospinning solution for the shell were injected together into the first nozzle. The electrospinning solution for the first layer was electrospun from the first nozzle while moving the substrate, the solvent was dried, and the first layer was heat-treated at 50 °C for 1 hour and compressed, and then the substrate was peeled off to manufacture a separator.

The separator is composed of a first layer including core-shell type fibers, wherein the core is included in an amount of 90 parts by weight and the shell is included in an amount of 10 parts by weight, based on 100 parts by weight of the total of the core and the shell in the core-shell type fibers, the core includes a polyimide-based resin having a unit of Chemical Formula 1-3-1, the shell includes a polysilsesquioxane-based resin having a unit of Chemical Formula 2-4, and an average diameter of the core-shell type fiber is 150 nm.

The electrospinning process was performed as follows: The internal space temperature where electrospinning was performed was 22°C, the gap between one nozzle pack with a needle size of 25G and the collecting roller was 16 cm, the electrospinning solution was added to the tip, a voltage of 40 to 75 kV was applied, and electrospinning was performed. The roller speed of the collecting roller was set to 1 to 3 m/min. In addition, the air pressure was applied by flowing air at a pressure of 0.275 MPa. After electrospinning, the fiber was dried with hot air at 90 °C.

### Example 2

### Preparation of electrospinning solution for core-shell type fibers

Pyromellitic dianhydride (PMDA) and 4,4'-oxydianiline (ODA) were polymerized to prepare polyamic acid, and dimethylacetamide as a solvent was mixed to prepare an electrospinning solution for a core. The polyamic acid can provide a polyimide unit of Chemical Formula 1-4-1 below in heat treatment during electrospinning as described below.

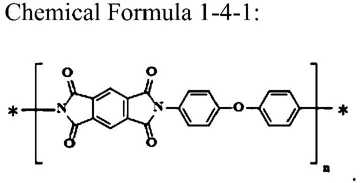

Dimethylacetamide as a solvent was mixed with polysilsesquioxane in which R³¹, R⁴¹, R⁵¹, and R⁶¹ in Chemical Formula 2-4 below are all phenyl groups to prepare an electrospinning solution for a shell.

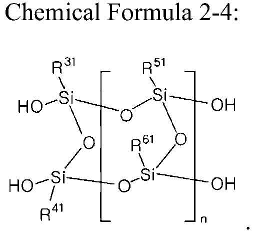

### Electrospinning and separator manufacturing

An electrospinning device equipped with a first nozzle, a second nozzle, and a third nozzle sequentially located along the direction of movement of a substrate was prepared. The first nozzle, second nozzle and third nozzle each have one spinning hole that was not divided into a core and a shell. The prepared electrospinning solution for the core and the electrospinning solution for the shell were injected together into each of the first nozzle, second nozzle and third nozzle.

While moving the substrate, the electrospinning solution for the core and the electrospinning solution for the shell were sequentially electrospun from the first nozzle, the second nozzle, and the third nozzle, the solvent was dried, and the layers were heat-treated at 50 °C for 1 hour and compressed, and then the substrate was peeled off to manufacture a separator.

The separator includes sequentially laminated first, second, and third layers each including core-shell type fibers, wherein the core is included in an amount of 90 parts by weight and the shell is included in an amount of 10 parts by weight, based on 100 parts by weight of the total of the core and the shell in the core-shell type fibers, the core includes a polyimide-based resin having a unit of Chemical Formula 1-4-1, the shell includes a polysilsesquioxane-based resin having a unit of Chemical Formula 2-4, and an average diameter of the core-shell type fiber is 150 nm.

The electrospinning process was performed with reference to the process described in Example 1 above.

### Example 3

### Preparation of electrospinning solutions for first layer and third layer

Referring to Example 2, an electrospinning solution capable of providing a unit of Chemical Formula 1-4-1 below was prepared.

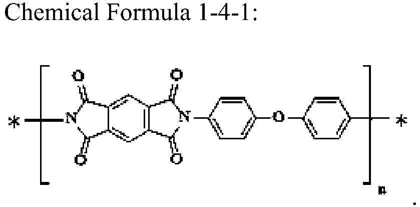

### Preparation of electrospinning solution for second layer

Referring to Example 2, an electrospinning solution for a core capable of providing a unit of Chemical Formula 1-4-1 below was prepared.

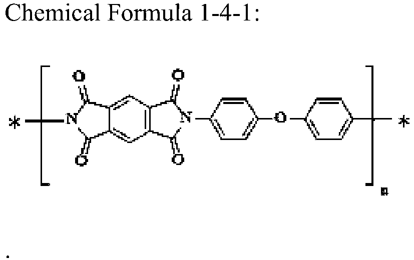

Dimethylacetamide as a solvent was mixed with polysilsesquioxane in which R³¹, R⁴¹, R⁵¹, and R⁶¹ in the following Chemical Formula 2-4 below all have the structure of Chemical Formula 2-6 below to prepare an electrospinning solution for a shell.

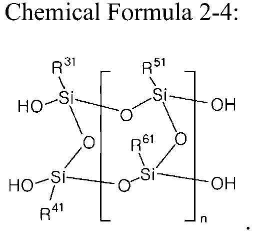

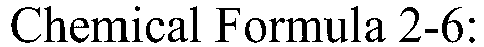

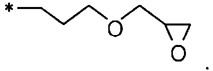

### Electrospinning and separator manufacturing

An electrospinning device equipped with a first nozzle, a second nozzle, and a third nozzle sequentially located along the direction of movement of a substrate was prepared. The electrospinning solution manufactured above was injected into each of the first nozzle and the third nozzle, and the electrospinning solution for the core and the electrospinning solution for the shell were injected into the second nozzle. The second nozzle has one spinning hole that was not divided into a core and a shell.

While moving the substrate, the electrospinning solution for the first layer, the electrospinning solution for the second layer, and the electrospinning solution for the third layer were sequentially electrospun from the first nozzle, the second nozzle, and the third nozzle, respectively, the solvent was dried, and the layers were heat-treated at 50 °C for 1 hour and compressed, and then the substrate was peeled off to manufacture a separator (thickness: 10 µm).

The separator includes a first layer made of a polyimide-based resin fiber having a unit of Chemical Formula 1-4-1; a second layer including core-shell type fibers, wherein the core is included in an amount of 90 parts by weight and the shell is included in an amount of 10 parts by weight, based on 100 parts by weight of the total of the core and the shell, the core includes a polyimide-based resin having a unit of Chemical Formula 1-4-1, and the shell includes a polysilsesquioxane-based resin having a unit of Chemical Formula 2-4; and a third layer made of a polyimide-based resin fiber having a unit of Chemical Formula 1-4-1, which are sequentially laminated, wherein an average diameter of the core-shell type fiber is 150 nm.

The electrospinning process was performed with reference to the process described in Example 1 above.

### Example 4

### Preparation of electrospinning solutions for first layer and third layer

An electrospinning solution for a core and an electrospinning solution for a shell were prepared with reference to Example 1.

### Preparation of electrospinning solution for second layer

4,4'-biphthalic anhydride (BPDA) and p-phenylenediamine (pPDA) were polymerized to prepare polyamic acid, and dimethylacetamide was mixed to prepare an electrospinning solution.

### Electrospinning and separator manufacturing

An electrospinning device equipped with a first nozzle, a second nozzle, and a third nozzle sequentially located along the direction of movement of a substrate was prepared. The first nozzle and third nozzle each have one spinning hole that was not divided into a core and a shell. The prepared electrospinning solution for the core and the prepared electrospinning solution for the shell were injected together into each of the first nozzle and the third nozzle, and the electrospinning solution for the second layer was injected into the second nozzle.

While moving the substrate, the electrospinning solution for the first layer, the electrospinning solution for the second layer, and the electrospinning solution for the third layer were sequentially electrospun from the first nozzle, the second nozzle, and the third nozzle, respectively, the solvent was dried, and the layers were heat-treated at 50 °C for 1 hour and compressed, and then the substrate was peeled off to manufacture a separator.

The separator includes a first layer including core-shell type fibers, wherein the core is included in an amount of 90 parts by weight and the shell is included in an amount of 10 parts by weight, based on 100 parts by weight of the total of the core and the shell, the core includes a polyimide-based resin having a unit of Chemical Formula 1-3-1, and the shell includes a polysilsesquioxane-based resin having a unit of Chemical Formula 2-4; a second layer made of polyimide-based resin fibers having a unit of Chemical Formula 1-3-1; and a third layer including core-shell type fibers, wherein the core is included in an amount of 90 parts by weight and the shell is included in an amount of 10 parts by weight, based on 100 parts by weight of the total of the core and the shell, the core includes a polyimide-based resin having a unit of Chemical Formula 1-3-1, and the shell includes a polysilsesquioxane-based resin having a unit of Chemical Formula 2-4, which are sequentially laminated, wherein an average diameter of the core-shell type fiber is 150 nm.

The electrospinning process was performed with reference to the process described in Example 1 above.

### Examples 5 and 6

Separators were manufactured in the same manner as in Example 4, except that the voltage was changed during electrospinning in Example 4. In Example 5, an average diameter of the core-shell type fiber is 100 nm, and in Example 6, an average diameter of the core-shell type fiber is 200 nm.

### Comparative Examples 1 and 2

Separators (thickness: 10 µm) were manufactured in the same manner as in Example 4, except that the voltage was changed during electrospinning in Example 4. In Comparative Example 1, an average diameter of a core-shell type fiber is 20 nm, and in Comparative Example 2, an average diameter of a core-shell type fiber is 300 nm.

### Comparative Example 3

4,4'-biphthalic anhydride (BPDA) and p-phenylenediamine (pPDA) were polymerized to prepare polyamic acid, and dimethylacetamide was mixed to prepare an electrospinning solution. A separator was manufactured in the same manner as in Example 4, except that the electrospinning solution manufactured above was injected into each of the first nozzle, the second nozzle, and the third nozzle. An average diameter of a polyimide-based resin fiber is 150 nm. The separator of Comparative Example 3 did not include core-shell type fibers.

### Manufacture of battery

Manufacture of negative electrode:
97 wt% of graphite particles with an average particle size of 25 µm, 1.5 wt% of a styrene-butadiene rubber (SBR) binder, and 1.5 wt% of carboxymethyl cellulose (CMC) were mixed, and then the mixture was input into distilled water and stirred for 60 minutes using a mechanical stirrer to prepare a negative electrode active material slurry. The slurry was applied onto a 10 µm-thick copper current collector using a doctor blade, dried in a hot air dryer at 100 °C for 0.5 hour, dried again under vacuum at 120 °C for 4 hours, and then roll-pressed to manufacture a negative electrode.

Manufacture of positive electrode:
97 wt% of LiCoO₂, 1.5 wt% of carbon black powder as a conductive material, and 1.5 wt% of polyvinylidene fluoride (PVdF) were mixed, input into an N-methyl-2-pyrrolidone solvent, and stirred for 30 minutes using a mechanical stirrer to prepare a positive electrode active material slurry. The slurry was applied onto a 20 µm-thick aluminum current collector using a doctor blade, dried in a hot air dryer at 100 °C for 0.5 hour, dried again under vacuum at 120 °C for 4 hours, and then roll-pressed to manufacture a positive electrode.

Electrode assembly jelly roll:
Each separator obtained according to the examples and comparative examples was interposed between the positive electrode and the negative electrode manufactured above, and then wound to manufacture an electrode assembly jelly roll. The jelly roll was inserted into a pouch, an electrolyte was injected, and the pouch was vacuum-sealed. As the electrolyte, 1.3 M LiPF₆ dissolved in a mixed solvent of ethylene carbonate (EC), ethyl methyl carbonate (EMC), and diethyl carbonate (DEC) in a volume ratio of 30:50:20 was used. The jelly roll inserted into the pouch was pressed at a temperature of 80 °C for 3 minutes while applying a pressure of 11.7 kgf/cm² to manufacture a rechargeable lithium battery.

The following physical properties were evaluated for the separators manufactured in the examples and comparative examples.

### Identification and average diameter of core-shell type fibers

The cross-section of the fibers included in the first layer of the separators manufactured in the examples was confirmed using an SEM. The SEM results confirmed that the fibers were core-shell type fibers.

The average diameter was calculated by selecting a range of 10 cross-sections to 30 cross-sections from the cross-section of the layer, measuring each diameter using a microscope or the like, and calculating the average of the resulting diameters. When the cross-section of the fiber is circular, the normal diameter is used, and when the cross-section of the fiber is not circular but oval or amorphous, the longest diameter which is the largest value among the diameters measured in the cross-section is used.

### Dry thermal shrinkage rate (units: %)

Each separator for a rechargeable lithium battery of the examples and comparative examples was cut into a size of 8 cm × 8 cm to manufacture a sample. After drawing a 5 cm x 5 cm square on the surface of the sample, the sample was placed between paper or alumina powder, left in an oven at 150 °C for 1 hour, and taken out, the dimensions of the sides of the drawn square were measured, and the thermal shrinkage rate in each of the machine direction (MD) and transverse direction (TD) was calculated. The thermal shrinkage rate was calculated according to Mathematical Formula 1 below. A thermal shrinkage rate in each of the MD and TD was calculated, and then an average value was obtained. Mathematical formula 1: $Thermal shrinkage rate = \left(L0-L1\right) / L 0 \times 100 .$

L0 is the initial length of the separator, and L1 is the length of the separator after being left at 150 °C for 1 hour.

### Thermal shrinkage rate in electrolyte (units: %)

Each separator for a rechargeable lithium battery of the examples and comparative examples was cut into a size of 8 cm × 8 cm to prepare a sample. A 5 cm × 5 cm square was drawn on the surface of the above sample. One sheet of the sample was placed between the positive electrode and the negative electrode to manufacture three sets of positive electrode-sample-negative electrode laminates, which were then placed in a pouch. 2 g of an electrolyte (1.5 M LiPF₆ dissolved in ethylene carbonate, ethyl methyl carbonate, and diethyl carbonate (volume ratio of 30:50:20)) was injected to completely saturate the laminate with the electrolyte, sealed, and left at 25 °C for 12 hours. Then, the sample was left in an oven at 150 °C for 1 hour and then taken out, and the dimensions of the sides of the drawn square were measured to calculate the thermal shrinkage rate in each of the machine direction (MD) and the transverse direction (TD). The thermal shrinkage rate was calculated according to Mathematical Formula 1. A thermal shrinkage rate in each of the MD and TD was calculated, and then an average value was obtained.

### Electrolyte wettability (units: cm²)

The manufactured separator was dried in an oven at 120 °C for 12 hours and cut into a size of 8 cm × 8 cm to manufacture specimens. 15 µl of an electrolyte (1.5 M LiPF₆ dissolved in ethylene carbonate, ethyl methyl carbonate, and diethyl carbonate (volume ratio of 30:50:20)) was dropped onto the specimen from a height of 1 cm, and the electrolyte-wetted area of the specimen was calculated after 30 seconds. The electrolyte-wetted area was calculated using the Image J program.

### Strength (units: kgf/cm²)

The strength of the manufactured separator was measured by cutting it into a size of 1 cm × 12 cm and dividing the maximum force required to break the separator by the thickness × width (units: kgf/cm²) using a measuring device (Instron 5965, Instron).

### Air permeability (units: sec/100 cc)

The air permeability of the manufactured separator was measured by measuring the time (units: seconds) it took for 100 cc of air to pass through the separator using a measuring device (EG01-55-1MR, Asahi Seiko).

### Air permeability measurement device setting conditions:

Measurement pressure: 0.5 kg/cm², cylinder pressure: 2.5 kg/cm², and setting time: 10 seconds

**Table 1:**

| | Examples | | | | | | Comparative Examples | | |
|---|---|---|---|---|---|---|---|---|---|
| | 1 | 2 | 3 | 4 | 5 | 6 | 1 | 2 | 3 |
| Average diameter (nm) of core-shell type or non-core-shell type fibers | 150 | 150 | 150 | 150 | 100 | 200 | 20 | 300 | 150 |
| Thickness (µm) | 10 | 10 | 10 | 10 | 10 | 10 | 10 | 10 | 10 |
| Dry thermal shrinkage rate | 0 | 0 | 0 | 0 | 0 | 0 | 0 | 0 | 0 |
| Electrolyte thermal shrinkage rate | 0 | 0 | 0 | 0 | 0 | 0 | 0 | 0 | 0 |
| Strength | 522 | 2974 | 1830 | 2135 | 1812 | 1024 | 543 | 612 | 1611 |
| Air permeability | 53 | 98 | 104 | 95 | 76 | 312 | 1 | 1053 | 113 |
| Electrolyte wettability | 4.22 | 5.89 | 3.43 | 5.13 | 4.97 | 5.34 | 3.22 | 3.14 | 2.89 |

As shown in Table 1 above, the separators of the examples not only have high heat resistance properties, but also exhibit high strength and desired or improved air permeability, thereby improving battery safety. In the case of the separators of the Comparative Examples, the separator effects of the Examples could not be obtained, as shown in Table 1 above.

A separator for a rechargeable battery according to one example embodiment has desired or improved heat resistance, resulting in a low dry shrinkage rate and a low shrinkage rate in an electrolyte, thereby reducing or preventing short circuits and increasing battery safety.

A separator for a rechargeable battery according to one example embodiment has desired or improved electrolyte wettability, which increases the mobility of lithium ions and accelerates the electrolyte injection speed, thereby improving battery capacity.

Since a separator for a rechargeable battery according to one example embodiment does not include a porous substrate, the separator has a thin thickness and does not have a short circuit problem due to thermal shrinkage and meltdown at high temperatures caused by the porous substrate, so battery safety can be high.

A separator for a rechargeable battery according to one example embodiment can have desired or improved manufacturing processability of the separator by including core-shell type fibers that can be manufactured without using a core-shell type nozzle.

Although the example embodiments of the present disclosure have been described above, the present disclosure is not limited thereto, and various modifications may be made within the scope of the claims, the detailed description of the disclosure, and the attached drawings, which also fall within the scope of the present disclosure.

## Claims

1. A separator for a rechargeable battery, the separator comprising:
a first layer including core-shell type fibers having a core and a shell surrounding the core;
wherein the core comprises a polyimide-based material and the shell comprises a polysilsesquioxane-based material; and
the core-shell type fibers have an average diameter of about 30 nm or more and about 200 nm or less.

2. The separator of claim 1, wherein
(a) a diameter of the core is larger than a thickness of the shell;
and/or
(b) the core has a diameter of about 120 nm or more and about 140 nm or less, and the shell has a thickness of about 10 nm or more and about 30 nm or less;
and/or
(c) the polyimide-based material includes a repeating unit of a compound corresponding to Chemical Formula 1: 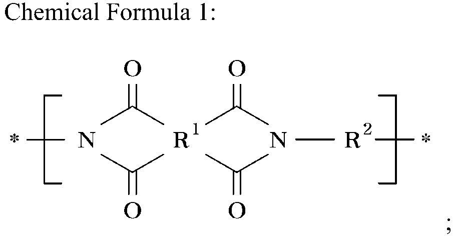 in Chemical Formula 1,
* indicates a connecting site of an element,
R¹ comprises a tetravalent organic group, and
R² comprises at least one of a divalent aliphatic, alicyclic, and aromatic organic group having a total in a range of about 3 carbon atoms to about 30 carbon atoms, and a combination thereof;
and/or
(d) the polyimide-based material has a weight average molecular weight in a range of about 100,000 g/mol to about 300,000 g/mol;
and/or
(e) the polyimide-based material comprises a crosslinkable functional group;
and/or
(f) the polysilsesquioxane-based material has a weight average molecular weight in a range of about 10,000 g/mol to about 30,000 g/mol.

3. The separator of claim 1 or claim 2, wherein the polysilsesquioxane-based material comprises one or more of a crosslinkable functional group and an aryl group having a range of about 6 carbon atoms to about 20 carbon atoms.

4. The separator of any one of claims 1 to 3, wherein the polysilsesquioxane-based material comprises a compound corresponding to a unit of Chemical Formula 2-3: 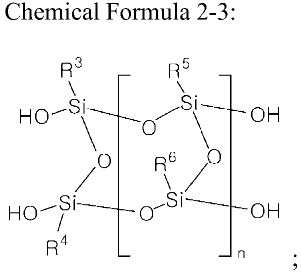
in Chemical Formula 2-3,
R³, R⁴, R⁵, and R⁶ are each independently hydrogen, a hydroxyl group, an alkyl group having a range of about 1 carbon atom to about 20 carbon atoms, an alkenyl group having a range of about 2 carbon atoms to about 20 carbon atoms, an alkynyl group having a range of about 2 carbon atoms to about 20 carbon atoms, a cycloalkyl group having a range of about 3 carbon atoms to about 20 carbon atoms, an aryl group having a range of about 6 carbon atoms to about 20 carbon atoms, an arylalkyl group having a range of about 7 carbon atoms to about 20 carbon atoms, a crosslinkable functional group, or a combination thereof, and
n is a number of moles of the unit.

5. The separator of claim 4, wherein the crosslinkable functional group comprises one or more compounds corresponding to Chemical Formulas 2-1 and 2-2: 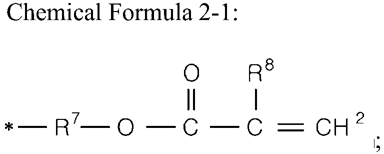 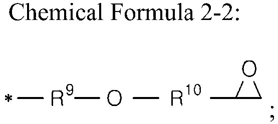
in Chemical Formulas 2-1 and 2-2,
R⁸ is hydrogen or a methyl group, and
R⁷, R⁹, and R¹⁰ each independently comprises an alkylene group having a range of about 1 carbon atom to about 20 carbon atoms.

6. The separator of any one of claims 1 to 5, wherein the core of the core-shell type fibers is included in an amount in a range of about 10 wt% to about 95 wt%, and the shell is included in an amount in a range of about 5 wt% to about 90 wt%.

7. The separator of any one of claims 1 to 6, wherein the separator comprises one of a single layer and a multi-layer including the first layer.

8. The separator of claim 7, wherein the separator comprises a multi-layer including the first layer and a second layer.

9. The separator of claim 8, wherein the second layer comprises a fibrous layer, a non-fibrous layer, or a combination thereof.

10. The separator of claim 9, wherein the fibrous layer and the non-fibrous layer each comprise one or more of polyacrylonitrile, polyaniline, polypyrrole, polyrhodanine, melamine, polyurea, polyvinyl chloride, polyvinyl alcohol, polyethylene oxide, polymethyl methacrylate, polyacrylic acid, polylactic acid, polyimide, polyamideimide, polyaramid, polybenzylimidazole, polypropylene, resorcinol-formaldehyde resin, melamine-formaldehyde resin, pitch, sucrose, glucose, cellulose, and polyvinylidene fluoride.

11. The separator of claim 8, wherein the separator is formed by sequentially laminating the first layer, the second layer, and the first layer, or by sequentially laminating the second layer, the first layer, and the second layer.

12. The separator of any one of claims 1 to 11, wherein the separator does not have a porous substrate.

13. The separator of any one of claims 1 to 12, wherein the polyimide-based material includes one or more units of Chemical Formulas 1-3 and 1-4: 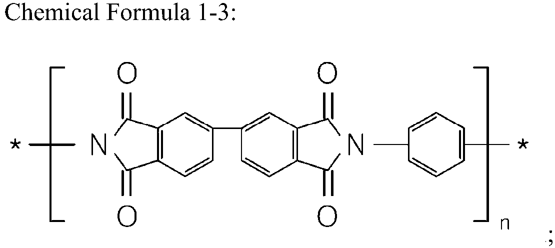 and 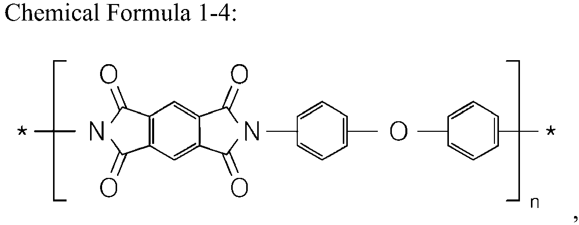 and
the polysilsesquioxane-based material includes a unit represented by Chemical Formula 2-4: 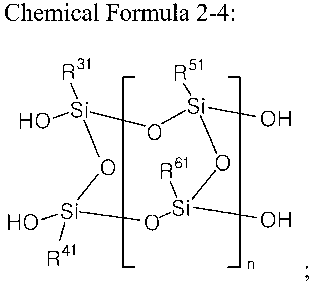
Wherein in Chemical Formula 2-4, R³¹, R⁴¹, R⁵¹, and R⁶¹ each independently comprises a compound represented by Chemical Formula 2-5, Chemical Formula 2-6, or a phenyl group:

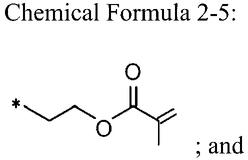

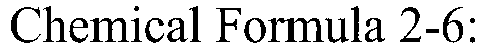

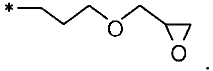

14. The separator of any one of claims 1 to 13, wherein the separator has a thickness of about 10 µm or less.

15. A rechargeable battery comprising:
a positive electrode;
a negative electrode; and
the separator of any one of claims 1 to 14 located between the positive electrode and the negative electrode.
